## Europäisches Patentamt
## European Patent Office
## Office européen des brevets

(19)

(11) Veröffentlichungsnummer : **0 197 301**
**B1**

(12) **EUROPÄISCHE PATENTSCHRIFT**

(45) Veröffentlichungstag der Patentschrift :
**11.10.89**

(21) Anmeldenummer : **86102894.2**

(22) Anmeldetag : **05.03.86**

(51) Int. Cl.⁴: **F 16 J 15/10**, F 16 J 15/12,
F 01 N 7/16, F 16 L 23/00

(54) **Dichtung.**

(30) Priorität : **10.04.85 DE 3512842**

(43) Veröffentlichungstag der Anmeldung :
**15.10.86 Patentblatt 86/42**

(45) Bekanntmachung des Hinweises auf die Patenterteilung : **11.10.89 Patentblatt 89/41**

(84) Benannte Vertragsstaaten :
**AT BE CH DE FR GB IT LI NL SE**

(56) Entgegenhaltungen :
DE-A- 2 829 333
FR-A- 1 333 417
FR-A- 2 473 623
GB-A- 2 118 985
US-A- 2 084 054
US-A- 3 916 057
US-A- 4 156 533
US-A- 4 549 741

(73) Patentinhaber : **Feodor Burgmann Dichtungswerke
GmbH & Co.
Äussere Sauerlacher Strasse 6-8
D-8190 Wolfratshausen 1 (DE)**

(72) Erfinder : **Irmler, Josef
Am Kammerloh 12
D-8193 Münsing (DE)**

(74) Vertreter : **Empl, Karl et al
Patentanwälte Dipl.-Ing. K. Empl Dipl.-Ing., Dipl.-Wirt-
sch.-Ing. K. Fehners Schumannstrasse 2
D-8000 München 80 (DE)**

## Beschreibung

Die Erfindung betrifft eine Dichtung für statischen Einsatz mit einem nichtmetallischen Grundkörper zur Abdichtung von zwei Flanschen bei Temperaturen über 500 °C, vorzugsweise für heißgehende Abgasrohre.

Derartige als Flachdichtungen ausgebildete Dichtungen sind bekannt (US-PS 2 084 054) und enthalten einen flächigen Grundkörper aus Asbest, der durch ein Metallblech versteift ist. Abgesehen davon, daß man bemüht ist, Asbest durch andere Werkstoffe zu ersetzen, können Dichtungen in dieser Ausbildung nicht in allen Anwendungsfällen die erforderliche Dauerstandsfestigkeit und Dichtwirkung erbringen, insbesondere bei einem Einsatz bei Temperaturen weit über 500 °C. Die Undichtigkeit ist unter anderem dadurch bedingt, daß sich die Flanschen (und auch die diese zusammenhaltenden Schrauben) temperaturabhängig verformen, so daß eine Verwerfung der ursprünglich ebenen und im wesentlichen zueinander parallelen Dichtungs-Anlageflächen eintritt, zwischen denen die Dichtung eingespannt ist. Hierdurch öffnen sich Spalte, welche von der Dichtung, insbesondere nach längerer Betriebszeit, nicht mehr durch deren Eigenelastizität geschlossen werden können.

Bekannt ist ferner ein im Querschnitt kreis- oder ellipsenförmiges oder rechteckiges Dichtungsmaterial (US-PS 4 549 741), das eine aus hochtemperaturfesten anorganischen Keramikfasern gewebte oder gestrickte äussere schlauchartige Umhüllung aufweist, in welcher sich ein durch Extrusion hergestellter oder streifenförmig strukturierter Kern befindet, der ein bei Temperaturerhöhung anschwellendes Material enthält. Bekannt ist es ferner durch Zusammenschluß der Enden eines derartigen Dichtungsmaterials, wobei die Stoßstellen vom Kern und Umhüllung versetzt werden, eine ringförmige Dichtung herzustellen.

Bekannt sind ferner für winkelbewegliche Gelenke bestimmte Dichtungen (DE-PS 28 29 333), welche eine sphärisch gekrümmte Anlagefläche aufweisen, die mit einer komplementär geformten Gegenfläche in einem der Gelenkflansche gleitend zusammenwirkt. Der dabei verwendete ringförmige Dichtungskörper ist aus Bändern gewickelt, welche aus Metalldrahtgewebe oder -geflecht bestehen und Glimmermaterial kammern.

Es ist der Fachwelt bekannt, daß sich Glimmer-Rohstoffe durch Behandlung mit Reaktionslösungen, ggf. mit zusätzlicher Einwirkung höherer Temperaturen, in Glimmerschichten aufspalten lassen. Die so gewonnenen Glimmerschichten bzw. -scheibchen werden unter Beifügung von Bindemitteln zu Folien, Platten und Formteilen weiterverarbeitet, die beispielsweise in der Elektroindustrie dann zum Einsatz gelangen, wenn es auf eine Beibehaltung der erteilten Form bei höheren Temperaturen ankommt.

Bindemittelfreier Glimmer wurde auch bei chemisch aggresiven Medien für Dichtungsscheiben oder Schutzschichten eingesetzt.

Bekannt sind ferner Glimmer-Werkstoffe, wie beispielsweise Vermiculit, welche bei hohen Temperaturen auf ein stark vergrößertes Volumen gebracht (expandiert) werden. Sie wurden bisher für untergeordnete Zwecke, z. B. als Verpackungsmaterial, oder für Wärmeisolierungen eingesetzt.

Aufgabe der vorliegenden Erfindung ist es, eine Dichtung der eingangs genannten Art zu schaffen, welche preisgünstig herstellbar ist, zwischen Flanschen mit ebenen Dichtungs-Anlageflächen einsetzbar ist und welche auch eine Dichtwirkung gewährleistet, wenn temperaturbedingte Verwerfungen der Dichtungs-Anlageflächen und/oder Änderungen von deren gegenseitiger Lage eintreten.

Die Erfindung löst diese Aufgabe dadurch, daß die Dichtung aus flächigem Glimmerwerkstoff mit mindestens einer Durchlaßöffnung ausgebildet ist, daß der Glimmerwerkstoff eine Vielzahl von übereinandergeschichteten flachen Glimmerscheibchen enthält, die ihrerseits von einer Mehrzahl von dünnsten, von der natürlichen Materialbindung zusammengehaltenen Glimmerplättchen gebildet sind, wobei die Glimmerscheibchen mit der Fläche ihrer größten Ausdehnung im wesentlichen parallel zu den für die Anlage an den Flanschen bestimmten Außenflächen gerichtet sind und daß der Glimmerwerkstoff eine Bindemittelschicht enthält, die in den Überlappungsbereichen unmittelbar übereinanderliegender Glimmerscheibchen zwischenliegend angeordnet ist, wobei die Glimmerscheibchen und die Bindemittelschicht aus solchen Materialien bestehen, daß der Glimmerwerkstoff in nicht eingespanntem Zustand eine progressive Zunahme seiner Dicke, gemessen lotrecht zur größten Flächenausdehnung der Glimmerscheibchen, aufweist, wobei diese Dickenzunahme bei ca. 500 °C einsetzt und bei 800 °C mindestens 100 % beträgt, bezogen auf die Dicke bei 20 °C.

Eine derart ausgebildete Dichtung erfährt bei höheren Temperaturen, bei denen sich merkliche Verwerfungen bzw. Abstandänderungen der Dichtungs-Anlageflächen der Flansche auszubilden beginnen, eine Dickenzunahme, welche einer Spaltbildung zwischen den Außenflächen der Dichtung und den erwähnten Anlageflächen entgegenwirkt. Es wurde festgestellt, daß auch nach dieser thermisch hervorgerufenen Dickenzunahme der Glimmerwerkstoff noch eine beachtliche Eigenelastizität beibehält, so daß auch nach einer Vielzahl von Temperatur-Lastspielen eine einwandfreie Dichtwirkung gegeben ist.

Vorteilhaft steht die Bindemittelschicht des Glimmerwerkstoffes mindestens zwischen Randbereiche aufeinanderliegender Glimmerplättchen ein, wodurch bewirkt wird, daß die Dichtung in nicht eingebautem Zustand vergrößerte Stabilität erhält, während die thermisch bedingte Dickenzunahme der Dichtung im Betriebszustand verbessert wird. Die Bindemittelschicht des Glimmerwerkstoffes besteht vorteilhaft aus Kunstharz, wobei sich ein flexibles Silikon-Kunstharz mit funktionellen Gruppen besonders bewährt hat. Wenn auch andere Glimmersorten für die Zwecke der Neuerung verwendbar sind, beispielsweise Muskowit, so wurde als besonders zweckmäßiges Material für die Glimmerscheibchen Phlogopit-Glimmer erkannt.

Besonders bei Dichtungen, deren Dicke erheblich größer als ein Millimeter ist, erweist es sich als vorteilhaft, daß der Glimmerwerkstoff mindestens ein sich im wesentlichen parallel zu den Außenflächen erstreckendes, jeweils zwischen Schichten von Glimmerscheibchen angeordnetes Trägermaterial, beispielsweise ein dünnes Stahldrahtgewebe, enthält. Als Trägermaterial kann auch Keramik, Papier oder ähnliches dienen.

Für praktisch alle Anwendungsfälle ist es vorteilhaft, daß jede Durchlaßöffnung eine Einfassung aus Metallblech aufweist, die mit ihren beiden kreisringförmigen Teilen die Außenflächen des Glimmerwerkstoffes übergreift. Diese Einfassung hindert die erwünschte temperaturbedingte Dickenzunahme des Glimmerwerkstoffes nur sehr wenig, sichert aber dessen mechanischen Zusammenhalt und verhindert auch, daß das abzudichtende Medium zwischen die einzelnen Schichten der Glimmerscheibchen bzw. zwischen die minimal dünnen Glimmerplättchen eindringt und diese chemisch und/oder mechanisch angreift. Abhängig von der Größe und den Einsatzbedingungen der Dichtung kann diese eine sich über ihren ganzen äußeren Umfang erstreckende Einfassung aus Metallblech aufweisen, deren beide streifenförmigen Teile die Außenfläche des Glimmerwerkstoffes übergreifen. Eine solche Einfassung behindert zwar etwas die erwünschte temperaturbedingte Dickenzunahme der Dichtung, verleiht ihr aber eine wesentlich höhere mechanische Stabilität. Anstelle dieser Einfassung des äußeren Umfanges kann eine Dichtung, welche weitere Durchlaßöffnungen für die Aufnahme von Spannmitteln für die Flansche aufweist, an letzteren Durchlassöffnungen ähnliche Einfassungen enthalten, wie sie für die Durchlassöffnungen vorgesehen sind, welche für den Durchtritt des abzudichtenden Mediums bestimmt sind. Die hierdurch gegebene Behinderung der temperaturbedingten Dickenzunahme wird praktisch völlig vermieden, wenn die weiteren Durchlaßöffnungen an ihren von der bzw. den Durchlaßöffnungen für das abzudichtende Medium abgewandten Seiten teilweise von an den Außenflächen des Glimmerwerkstoffes anliegenden Blechteilen umgeben sind, die angenähert die Form eines halben Kreisringes aufweisen, wobei jeweils die einer weiteren Durchlaßöffnung zugeordneten Blechteile an ihren Außenrändern durch einen Blechstreifen einstückig miteinander verbunden sind, der sich über den äußeren Umfang der Dichtung hinweg erstreckt. Die erläuterten Blechteile halten die Außenflächen des Glimmerwerkstoffes nur in solchen Bereichen zusammen, die für die Dichtwirkung unmaßgeblich sind.

Ein Ausführungsbeispiel der Erfindung mit einigen Variationen wird nachstehend anhand der Zeichnungen erläutert, in denen zeigt :

Fig. 1 eine Draufsicht auf eine Außenfläche der Dichtung ;

Fig. 2 einen Querschnitt durch die Dichtung gemäß der Linie II in Fig. 1 ;

Fig. 3 ein stark vergrößertes Detail des Querschnittes gem. Fig. 2 und

Fig. 4 ein Querschnittsdetail in noch stärkerer Vergrößerung.

Die Dichtung ist durch Stanzung oder durch ein anderes Fertigungsverfahren aus einer Platte eines an späterer Stelle noch näher erläuterten Glimmerwerkstoffes 1 hergestellt, dessen Dicke D Bruchteile von Millimeter oder auch mehrere Millimeter betragen kann. Die Dichtung hat in der Draufsicht im wesentlichen die Form eines gleichseitigen Dreiecks mit abgerundeten Ecken und besitzt eine zentrale Durchlaßöffnung 2, sowie drei weitere, diese umgebende Durchläßoffnungen 3 A, 3 B und 3 C, welche um 120° zueinander versetzt sind, gleiche Abstände zur Mitte der zentralen Durchlaßöffnung 2 aufweisen und im Bereich jeweils einer abgerundeten Ecke angeordnet sind. Diese weiteren Durchlaßöffnungen 3 A, 3 B, 3 C dienen zur Aufnahme von Spannmitteln wie beispielsweise Schrauben, mit denen zwei Flansche zusammengespannt werden, die mit der Dichtung abgedichtet werden und die mit zwei aufeinanderzu gerichteten, im wesentlichen ebenen Flächen an den beiden im wesentlichen parallelen Aussenflächen 4 A, 4 B an der Dichtung anliegen.

Die zentrale Durchlaßöffnung 2 weist eine aus Metallblech bestehende Einfassung 5 auf, die sich mit einem zentralen Teil 6, der in der Regel angenähert rohrförmige Gestalt aufweist, an den Innenumfang der Durchlaßöffnung 2 anschmiegt. Beidseitig von diesem zentralen Teil 6 erstrecken sich einstückig angeformte, kreisringförmige Teile 7, 8 radial nach aussen. Diese kreisringförmigen Teile 7, 8 liegen mit Vorspannung an den zugeordneten Aussenflächen 4 A, 4 B der Dichtung an.

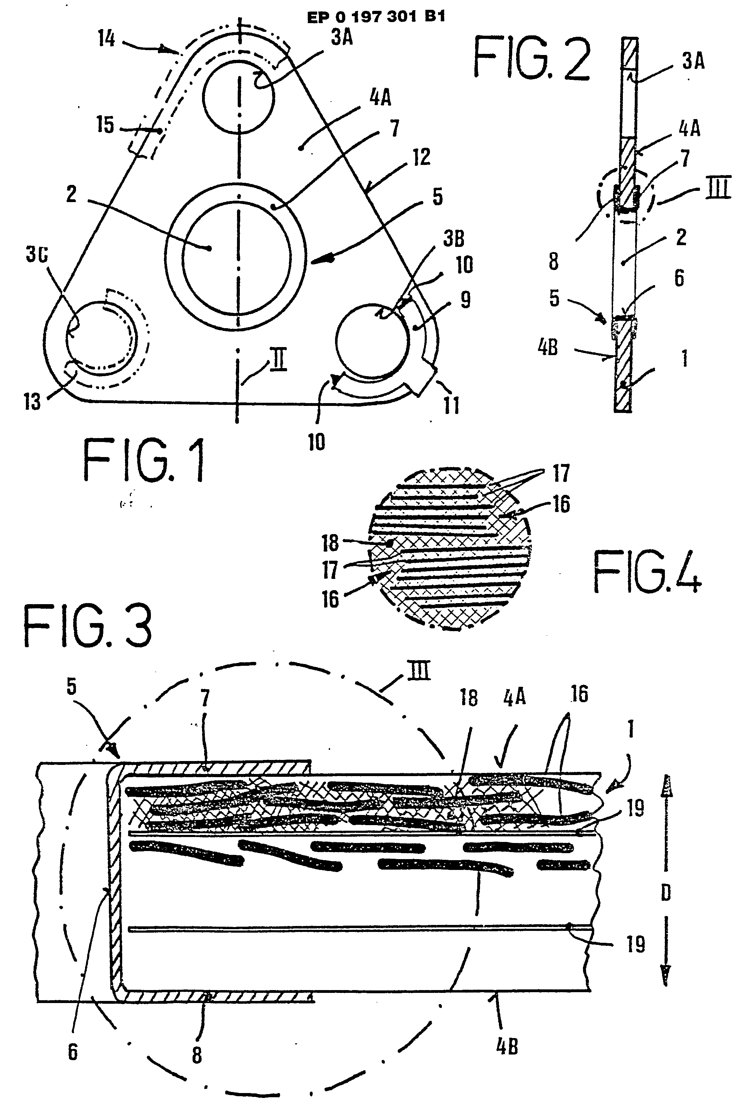

Jede der weiteren Durchlaßöffnungen 3 A, 3 B, 3 C ist teilweise, und zwar jeweils an der von der zentralen Durchlaßöffnung 2 abgewandten Seite, von einem Blechteil 9 umgeben, das an der jeweiligen Aussenfläche 4 A bzw. 4 B anliegt. Jedes Blechteil 9 hat die Form eines halben Kreisringes, dessen Innenradius etwas größer als der Radius der Durchlaßöffnung ist und dessen Aussenradius etwas geringer als der Abrundungsradius der Ecken der Dichtung ist. An jedes freie Ende der Blechteile 9 ist ein hakenförmiger Fortsatz 10 einstückig angeformt, der angenähert rechtwinkelig abgebogen und in den Glimmerwerkstoff eingedrückt ist. Die der gleichen weiteren Durchlaßöffnung 3 A, 3 B, 3 C zugeordneten beiden Blechteile sind durch einen Blechstreifen 11 einstückig miteinander verbunden, der sich über den äußeren Umfang 12 der Dichtung erstreckt. In der Fig. 1 ist das erläuterte Blechteil nur für die weitere Durchlaßöffnung 3 B veranschaulicht, obwohl entsprechend ausgebildete Blechteile auch an den Durchlaßöffnungen 3 A und 3 C vorgesehen sind.

Bei einer abgeänderten Ausführungsform der Dichtung können anstelle der Blechteile 9 für die weiteren Durchlaßöffnungen 3 A, 3 B, 3 C auch Einfassungen 13 vorgesehen werden, welche analog der Einfassung 5 für die zentrale Durchlaßöffnung 2 ausgebildet sind, so daß auf deren Beschreibung verwiesen werden kann. In der Fig. 1 ist von diesen drei Einfassungen 13 nur diejenige für die weitere Durchlaßöffnung 3 C teilweise in strichpunktierten Linien veranschaulicht.

Gemäß einer weiteren Alternative kann die Dichtung eine sich über ihren ganzen äußeren Umfang 12 erstreckende Einfassung 14 aufweisen, die mit zwei streifenförmigen Teilen 15 die Aussenflächen 4 A, 4 B des Glimmerwerkstoffes 1 umfaßt.

Jede der vorbeschriebenen Einfassungen 5, 13, 14 bzw. Blechteile 9 besteht aus einem Metallblech, das hinsichtlich seiner Dicke und seines Materials so ausgewählt ist, daß der die beiden Flansche zusammenpressenden Kraft nur relativ geringer Widerstand entgegengesetzt wird, d. h. der dichtenden Anlage der Flanschflächen an den Aussenflächen 4 A, 4 B kein wesentliches Hemmnis entgegensteht.

Der Glimmerwerkstoff 1 enthält als wesentliches Bestandteil eine Vielzahl von flachen Glimmerscheibchen 16, welche jeweils mit der Fläche ihrer größten Ausdehnung im wesentlichen parallel zueinander gerichtet sind und in mehreren Lagen regellos sich überlappend geschichtet sind. Die Glimmerscheibchen 16 bestehen aus Phlogopit-Glimmer, wobei aber für spezielle Anwendungsfälle auch eine Mischung mit anderen Glimmersorten möglich ist und auch ausschliesslich andere Glimmersorten, beispielsweise Muskowit-Glimmer, einsetzbar sind. Jedes Glimmerscheibchen besteht seinerseits aus einer Mehrzahl von dünnsten Glimmerplättchen 17 (Fig. 4), die bereits durch die natürliche Materialbindung zusammengehalten sind.

Zumindest in den Überlappungsbereichen unmittelbar übereinanderliegender Glimmerscheibchen 16 ist eine Bindemittelschicht 18 angeordnet, welche aus flexiblen Silikon-Kunstharz mit funktionellen Gruppen besteht. Diese Bindemittelschicht 18 steht zumindest zwischen Randbereiche aufeinanderliegender Glimmerplättchen 17 ein. (Fig. 4).

Für spezielle Anwendungszwecke und insbesondere bei Dichtungen, deren Dicke D deutlich über ein Millimeter liegt, kann zwischen Schichten von Glimmerscheibchen 16 eine oder mehrere Bahnen eines Trägermaterials 19 parallel zu den Aussenflächen 4 A, 4 B angeordnet werden, das aus einem temperaturbeständigem Werkstoff, beispielsweise einem dünnen Drahtgewebe besteht. Das Trägermaterial 19 kann aber auch aus einem Werkstoff gebildet sein, der in dem Temperaturbereich, für dessen Einsatz die Dichtung vorgesehen ist, nicht beständig ist und hat dann den Zweck, der Dichtung einen besseren Zusammenhalt und eine Formbeständigkeit bis zum Einbau zu verleihen.

## Patentansprüche

1. Dichtung für statischen Einsatz mit einem nichtmetallischen Grundkörper zur Abdichtung zwischen zwei Flanschen bei Temperaturen über 500 °C, vorzugsweise für heißgehende Abgasrohre, dadurch gekennzeichnet, daß die Dichtung aus flächigem Glimmerwerkstoff (1) mit mindestens einer Durchlaßöffnung (2) ausgebildet ist, daß der Glimmerwerkstoff (1) eine Vielzahl von übereinandergeschichteten flachen Glimmerscheibchen (16) enthält, die ihrerseits von einer Mehrzahl von dünnsten, von der natürlichen Materialbindung zusammengehaltenen Glimmerplättchen (17) gebildet sind, wobei die Glimmerscheibchen (16) mit der Fläche ihrer größten Ausdehnung im wesentlichen parallel zu den für die Anlage an den Flanschen bestimmten Außenflächen (4 A, 4 B) gerichtet sind und daß der Glimmerwerkstoff (1) eine Bindemittelschicht (18) enthält, die in den Überlappungsbereichen unmittelbar übereinanderliegender Glimmerscheibchen (16) zwischenliegend angeordnet ist, wobei die Glimmerscheibchen (16) und die Bindemittelschicht (18) aus solchen Materialien bestehen, daß der Glimmerwerkstoff (1) in nicht eingespanntem Zustand eine progressive Zunahme seiner Dicke (D), gemessen lotrecht zur größten Flächenausdehnung der Glimmerscheibchen (16), aufweist, wobei diese Dickenzunahme bei ca. 500 °C einsetzt und bei 800° mindestens 100 % beträgt, bezogen auf die Dicke bei 20 °C.

2. Dichtung nach Anspruch 1, dadurch gekennzeichnet, daß die Bindemittelschicht (18) des Glimmerwerkstoffes (1) mindestens zwischen Randbereiche aufeinanderliegender Glimmerplättchen (17) einsteht.

3. Dichtung nach Anspruch 1 oder 2, dadurch gekennzeichnet, daß ein wesentlicher Teil der Bindemittelschicht (18) des Glimmerwerkstoffes (1) aus einem Kunstharz besteht.

4. Dichtung nach Anspruch 3, dadurch gekennzeichnet, daß die Bindemittelschicht (18) aus flexiblen Silikon-Kunstharz mit funktionellen Gruppen besteht.

5. Dichtung nach Anspruch 1, dadurch gekennzeichnet, daß die im Glimmerwerkstoff (1) enthaltenen Glimmerscheibchen (16) aus Phlogopit-Glimmer bestehen.

6. Dichtung nach Anspruch 1, dadurch gekennzeichnet, daß der Glimmerwerkstoff (1) mindestens ein sich im wesentlichen parallel zu den Außenflächen (4 A, 4 B) erstreckendes, jeweils zwischen Schichten von Glimmerscheibchen (16) angeordnetes Trägermaterial (19) aufweist.

7. Dichtung nach Anspruch 1, dadurch gekennzeichnet, daß jede Durchlaßöffnung (2) eine Einfassung (5) aus Metallblech aufweist, die mit ihren beiden kreisringförmigen Teilen (7, 8) die Außenflächen (4 A, 4 B) des Glimmerwerkstoffes (1) übergreift.

8. Dichtung nach Anspruch 1, dadurch gekennzeichnet, daß sie eine sich über ihren ganzen äußeren Umfang (12) erstreckende Einfassung (14) aus Metallblech aufweist, deren beide streifenförmigen Teile (15) die Außenflächen (4 A, 4 B) des Glimmerwerkstoffes (1) übergreifen.

9. Dichtung nach Anspruch 1 oder 8, dadurch gekennzeichnet, daß sie weitere Durchlaßöffnungen (3 A, 3 B, 3 C) für die Aufnahme von Spannmitteln für die Flansche aufweist und daß diese weiteren Durchlaßöffnungen an ihren von der bzw. den für den Durchtritt des abzudichtenden Mediums bestimmten Durchlaßöffnungen (2) abgewandten Seite bzw. Seiten teilweise von an den Außenflächen (4 A, 4 B) des Glimmerwerkstoffes (1) anliegenden Blechteilen (9) umgeben sind, die angenähert die Form eines halben Kreisringes aufweisen, wobei jeweils die einer weiteren Durchlaßöffnung (3 A, 3 B, 3 C) zugeordneten Blechteile (9) an ihren Außenrändern durch einen Blechstreifen (11) einstückig miteinander verbunden sind, der sich über den äußeren Umfang (12) der Dichtung hinweg erstreckt.

10. Dichtung nach Anspruch 1 oder 7, dadurch gekennzeichnet, daß sie weitere Durchlaßöffnungen (3 A, 3 B, 3 C) für die Aufnahme von Spannmitteln für die Flansche aufweist und daß diese weiteren Durchlaßöffnungen Einfassungen (13) aus Metallblech aufweisen, die jeweils mit zwei kreisringförmigen Teilen die Außenflächen (4 A, 4 B) des Glimmerwerkstoffes (1) übergreifen.

11. Dichtung nach Anspruch 1, dadurch gekennzeichnet, daß die Zunahme der Dicke (D) bei 600 °C mindestens 10 % beträgt, bezogen auf die Dicke bei 20 °C.

12. Dichtung nach Anspruch 1 und 11, dadurch gekennzeichnet, daß die Zunahme der Dicke (D) bei 500 °C mindestens 30 % beträgt, bezogen auf die Dicke bei 20 °C.

## Claims

1. Seal for static use, comprising a non-metallic parent body for sealing between two flanges at temperatures above 500 °C, preferably for hot exhaust-gas pipes, characterized in that the seal is formed from a laminar mica material (1) having at least one passage opening (2), that the mica material (1) contains a plurality of flat mica scales (16) which are arranged in layers one above the other and are in turn formed by a plurality of the thinnest mica platelets (17) held together by the natural binding of the material, the mica scales (16) with their surface of greatest extent being orientated substantially parallel to the outer surfaces (4 A, 4 B) intended for bearing against the flanges, and that the mica material (1) contains a binder layer (18) which is arranged intermediately in the overlapping areas of mica scales (16) lying directly one above the other, the mica scales (16) and the binder layer (18) consisting of such materials that the mica material (1), in the unclamped state, exhibits a progressive increase in its thickness (D) measured perpendicularly to the largest surface extent of the mica scales (16), this increase in thickness starting at about 500 °C and being at least 100 % at 800 °C relative to the thickness at 20 °C.

2. Seal according to claim 1, characterized in that the binder layer (18) of the mica material (1) is located at least in between marginal areas of mica platelets (17) lying one above the other.

3. Seal according to claim 1 or 2, characterized in that a substantial portion of the binder layer (18) of the mica material (1) consists of a synthetic resin.

4. Seal according to Claim 3, characterized in that the binder layer (18) consists of a flexible silicone synthetic resin having functional groups.

5. Seal according to Claim 3, characterized in that the mica scales (16) contained in the mica material (1) consists of phlogopite mica.

6. Seal according to Claim 1, characterized in that the mica material (1) has at least one carrier material (19) which extends essentially parallel to the outer surfaces (4 A, 4 B) and is in each case arranged between layers of mica scales (16).

7. Seal according to Claim 1, characterized in that each passage opening (2) has a sheet-metal frame (5) which, with its two annular parts (7, 8), overlaps the outer surfaces (4 A, 4 B) of the mica material (1).

8. Seal according to Claim 1, characterized in that it has a sheet-metal frame (14) which extends over its entire outer periphery (12) and whose two strip-shaped parts (15) overlap the outer surfaces (4 A, 4 B) of the mica material (1).

9. Seal according to Claim 1 or 8, characterized in that it has further passage openings (3 A, 3 B, 3 C) for accommodating clamping means for the flanges, and that these further passage openings, on their side or sides remote from the passage opening or passage openings (2) intended for the passage of the medium to be sealed, are partly surrounded by sheet-metal parts (9) which bear against the outer surfaces (4 A, 4 B) of the mica material (1) and roughly have the shape of half a circular ring, the sheet-metal parts (9) allocated to a further passage opening (3 A, 3 B, 3 C) each being connected to one another in one piece at their outer margins by a sheet-metal strip (11) which extends beyond the outer periphery (12) of the seal.

10. Seal according to Claim 1 or 7, characterized in that it has further passage openings (3 A, 3 B, 3 C) for accommodating clamping means for the flanges, and that these further passage openings have sheet-metal frames (13) which, with two annular parts each, overlap the outer surfaces (4 A, 4 B) of the mica material (1).

11. Seal according to Claim 1, characterized in that the increase in the thickness (D) is at least 10 % at 600 °C relative to the thickness at 20 °C.

12. Seal according to Claims 1 and 11, characterized in that the increase in the thickness (D) is at least 30 % at 500 °C relative to the thickness at 20 °C.

**Revendications**

1. Joint pour utilisation statique avec un corps de base non métallique pour réaliser l'étanchéité entre deux brides à des températures supérieures à 500 °C, de préférence pour des tubes d'échappement de gaz chauds, caractérisé par le fait que le joint est réalisé en un matériau plat (1) à base de mica et comporte au moins un orifice de passage (2), par le fait que le matériau (1) à base de mica contient une pluralité de lames (16) en mica, plates, superposées lesquelles sont constituées d'une multitude de plaquettes ultra-minces (17) en mica agglomérées par l'adhésivité naturelle de ce matériau, les plaquettes (16) étant orientées par leur plan d'extension maximale sensiblement parallèlement aux plans extérieurs (4 A, 4 B) destinés à venir s'appliquer sur les brides et par le fait que le matériau (1) à base de mica contient une couche de liant qui est disposée dans les zones de chevauchement des lames (16) en superposition immédiate, lesdites lames (16) et la couche de liant (18) étant constituées de matières telles que le matériau (1) présente, à l'état non monté, une augmentation progressive de son épaisseur (D) mesurée perpendiculairement à l'extension plane maximale des lames (16), cette augmentation de l'épaisseur commençant à environ 500 °C et atteignant 800 °C à au moins 100 % par rapport à l'épaisseur à 20 °C.

2. Joint selon la revendication 1, caractérisé par le fait que la couche de liant (18) du matériau (1) à base de mica pénètre entre les plaquettes (17) superposées au moins dans les zones marginales.

3. Joint selon la revendication 1 ou 2, caractérisé par le fait qu'une partie importante de la couche de liant (18) du matériau (1) à base de mica est constituée en une résine synthétique.

4. Joint selon la revendication 3, caractérisé par le fait que la couche de liant (18) est constituée en une résine synthétique souple à base de silicone comportant des groupes fonctionnels.

5. Joint selon la revendication 1, caractérisé par le fait que les lames de mica (16) contenues dans le matériau (1) sont constituées de phlogopite.

6. Joint selon la revendication 1, caractérisé par le fait que le matériau (1) présente au moins un matériau du support disposé sensiblement parallèle aux faces extérieures (4 A, 4 B) disposées respectivement entre les couches de lames (16) de mica.

7. Joint selon la revendication 1, caractérisé par le fait que chaque orifice de passage (2) présente un encadrement (5) en tôle métallique qui, par ses deux parties de forme circulaire (7, 8) vient en prise sur les surfaces extérieures (4 A, 4 B) du matériau (1) à base de mica.

8. Joint selon la revendication 1, caractérisé par le fait qu'il présente un encadrement (14) s'étendant sur tout son pourtour extérieur (12), dont les deux parties (15) en forme de bande viennent en prise sur les faces extérieures (4 A, 4 B) du matériau (1) à base de mica.

9. Joint selon la revendication 1 ou 8, caractérisé par le fait qu'il présente d'autres orifices de passage (3 A, 3 B, 3 C) destinés à recevoir des moyens de serrage de la bride et que ces autres orifices de passage sont entourés par des éléments en tôle (9) s'appliquant sur les surfaces extérieures (4 A, 4 B) du matériau (1), sur leur côté (ou leurs côtés) non orienté(s) vers les orifices (2) de passage du fluide, les éléments en tôle (9) présentant approximativement la forme d'un demi-cercle, tandis que lesdits éléments (9) associés à un autre orifice de passage (3 A, 3 B, 3 C) sont assemblés sur leurs bords extérieurs par une bande de tôle (11) en une seule pièce, ladite bande (11) s'étendant au-delà du pourtour extérieur (12) du joint.

10. Joint selon la revendication 1 ou 7, caractérisé par le fait qu'il présente d'autres orifices de passage (3 A, 3 B, 3 C) pour la réception de moyens de serrage pour le joint et que ces autres orifices de passage présentent des encadrements (13) en tôle métallique lesquels viennent en prise par deux parties de forme circulaire sur les faces extérieures (4 A, 4 B) du matériau (1) à base de mica.

11. Joint selon la revendication 1, caractérisé par le fait que l'augmentation de l'épaisseur (D) s'élève de 10 % à la température de 600 °C par rapport à l'épaisseur à la température de 20 °C.

12. Joint selon la revendication 1 et la revendication 11, caractérisé par le fait que l'augmentation de l'épaisseur (D) s'élève à la température de 500 °C de 30 % au moins par rapport à l'épaisseur à la température de 20 °C.

FIG. 1

FIG. 2

FIG. 3

FIG. 4